# EUROPÄISCHE PATENTANMELDUNG

(11) **EP 1 927 429 A1**
(43) Veröffentlichungstag der Anmeldung: **04.06.2008**
(21) Anmeldenummer: 07022339.1
(22) Anmeldetag: 17.11.2007
(51) Int. Cl.: B23Q 3/157

(54) **Werkzeugmaschine mit Werkzeugmagazin**

(30) Priorität: 01.12.2006 DE 102006058221
(71) Anmelder: STAMA MASCHINENFABRIK GMBH, D-73278 Schlierbach (DE)
(72) Erfinder: Feinauer, Achim, Dr., 73033 Göppingen (DE); Blazek, Pavel, 73277 Owen (DE)
(74) Vertreter: Duhme, Torsten

(57) **Zusammenfassung**

Eine Werkzeugmaschine (10) zum spanabhebenden Bearbeiten von Werkstücken (42) besitzt ein stationäres Maschinengestell (22) und eine Werkzeugspindel (26). Die Werkzeugspindel (26) ist über eine erste Schlittenführung (14) relativ zu dem Maschinengestell (22) verfahrbar. Die Werkzeugmaschine (10) besitzt außerdem ein Werkzeugmagazin (50) mit einer Vielzahl von Magazinplätzen (54) zum Vorhalten von Bearbeitungswerkzeugen (30). Das Werkzeugmagazin (50) beinhaltet eine Bewegungsbahn, insbesondere für eine bewegliche Kette (52), an der die Magazinplätze (54) ausgebildet sind. Die Bewegungsbahn definiert eine Mantelfläche (64), innerhalb der die erste Schlittenführung (14) zumindest teilweise angeordnet ist. Gemäß einem Aspekt der Erfindung ist die Bewegungsbahn an dem stationären Maschinengestell (22) gelagert.

## Beschreibung

Die vorliegende Erfindung betrifft eine Werkzeugmaschine zum spanabhebenden Bearbeiten von Werkstücken, mit einem stationären Maschinengestell, mit einer Werkzeugspindel mit einer Spindelaufnahme zum Einspannen eines Bearbeitungswerkzeugs, und mit einer ersten Schlittenführung, mit deren Hilfe die Werkzeugspindel in einer ersten Achsrichtung relativ zu dem Maschinengestell verfahrbar ist, ferner mit einem Werkzeugmagazin, das eine Vielzahl von Magazinplätzen zum Vorhalten einer Vielzahl von Bearbeitungswerkzeugen besitzt, wobei das Werkzeugmagazin zumindest eine Bewegungsbahn aufweist, an der die Magazinplätze entlang laufen, und wobei die Bewegungsbahn eine Mantelfläche definiert, innerhalb der die erste Schlittenführung zumindest teilweise angeordnet ist.

Eine solche Werkzeugmaschine ist aus DE 43 11 469 C1 bekannt.

Die bekannte Werkzeugmaschine ist eine so genannte Fahrständermaschine. Bei dieser Art von Werkzeugmaschinen hängt der Spindelkopf mit der Werkzeugspindel vertikal an einem so genannten Fahrständer. Die Werkzeugspindel kann an dem Fahrständer in Vertikalrichtung auf- und abbewegt werden. Üblicherweise wird diese Bewegungsrichtung als Z-Achse bezeichnet. Der Fahrständer ist auf einem so genannten Kreuzteil angeordnet, das eine Bewegung des Fahrständers in zwei zueinander orthogonale Horizontalrichtung ermöglicht. Die erste Bewegungsrichtung ist dadurch realisiert, dass der Fahrständer auf einer ersten horizontalen Schlittenführung gelagert ist, die an der Oberseite des Kreuzteils angeordnet ist. Diese Bewegungsrichtung wird üblicherweise als Y-Achse bezeichnet. Die zweite horizontale Bewegungsrichtung ergibt sich daraus, dass das Kreuzteil seinerseits auf einer zweiten horizontalen Schlittenführung gelagert ist. Diese wird üblicherweise als X-Achse bezeichnet.

Bei der bekannten Werkzeugmaschine ist ein Werkzeugmagazin mit einer beweglichen Kette um den Außenumfang des Kreuzteils herumgeführt und an dem Kreuzteil befestigt. Das Kettenmagazin wird bei den Bewegungen des Kreuzteils auf der zweiten Schlittenführung mitgeführt. Ein großer Vorteil dieser Anordnung besteht darin, dass das Werkzeugmagazin in kompakter Weise in die Werkzeugmaschine integriert ist und die bekannte Werkzeugmaschine daher einen relativ geringen Platzbedarf hat. Außerdem ermöglicht diese Anordnung des Werkzeugmagazins das Ein- und Auswechseln eines Bearbeitungswerkzeugs im so genannten Pick-up-Verfahren. Dies bedeutet, dass die Werkzeugspindel ein Bearbeitungswerkzeug direkt in einen Magazinplatz ablegt bzw. direkt aus einem Magazinplatz aufnimmt. Ein zwischen dem Werkzeugmagazin und der Werkzeugspindel agierendes Greifelement wird bei diesem Verfahren nicht benötigt. Die bekannte Werkzeugmaschine ermöglicht sehr schnelle Werkzeugwechsel und damit sehr kurze Span-zu-Span-Zeiten.

Ein Nachteil dieser bekannten Werkzeugmaschine besteht allerdings darin, dass die Anzahl der Magazinplätze in dem Werkzeugmagazin wesentlich durch die Größe des Kreuzteils bestimmt ist. Eine Vergrößerung des Werkzeugmagazins bzw. eine Erhöhung der Anzahl der Magazinplätze ist nur in begrenztem Umfang möglich, indem die umlaufende Kette in X- oder Y-Richtung verlängert wird. Um eine deutlich größere Magazinkapazität bereitzustellen, wird daher in der Regel ein separates, zweites Werkzeugmagazin benötigt, das hinter der bekannten Werkzeugmaschine angeordnet wird, wobei die Bearbeitungswerkzeuge dann mit Hilfe einer Handlingeinheit zwischen den beiden Werkzeugmagazinen umgelagert werden. Die Handlingeinheit und das zweite Werkzeugmagazin erfordern zusätzliche Steuerungsfunktionen, weshalb diese Art der Erhöhung der Anzahl der Magazinplätze relativ aufwändig und teuer ist.

Es gibt eine Vielzahl von anderen Lösungen, um Werkzeugmagazine bei einer Werkzeugmaschine zu realisieren. DE 39 30 071 A1 offenbart beispielsweise eine Fahrständermaschine, bei der das Werkzeugmagazin austauschbar ausgebildet ist. An einem raumfesten Gestell innerhalb des Verfahrbereichs des Fahrständers ist eine Vielzahl von Werkzeugmagazinen angeordnet. Sowohl am Fahrständer als auch am Gestell sind Übergabeeinrichtungen für den Austausch von Werkzeugmagazinen vorgesehen. Der Fahrständer kann bei dieser Werkzeugmaschine also ein Werkzeugmagazin von dem separaten Gestell entnehmen, um es anschließend bei der Bearbeitung eines Werkstücks zu verwenden. Das verwendete Werkzeugmagazin wird auch hier bei den Bewegungen des Fahrständers mitgeführt.

Aus DE 199 19 446 A1 ist eine Werkzeugmaschine bekannt, bei der ein Werkzeugmagazin seitlich von dem Fahrständer der Maschine angeordnet ist. Das Werkzeugmagazin kann in den Arbeitsbereich der Werkzeugspindel eingeschwenkt werden und aus dem Arbeitsbereich wieder herausgeschwenkt werden.

Des Weiteren gibt es Werkzeugmaschinen, bei denen eine Magazinkette zum Vorhalten von Bearbeitungswerkzeugen seitlich und oberhalb einer (in diesem Fall typischerweise liegend angeordneten) Werkzeugspindel geführt ist. Die Werkzeugspindel bewegt sich außerhalb der Magazinkette, die zwar an einer geeigneten Kettenführung umlaufen kann, jedoch bei den Verfahrbewegungen der Werkzeugspindel nicht mitgeführt wird.

Diese bekannten Lösungen benötigen ebenfalls zusätzliche Antriebe und Steuerfunktionen, um einen Zugriff auf sämtliche Magazinplätze zu ermöglichen. Darüber hinaus erfordern die bekannten Lösungen teilweise einen erheblichen zusätzlichen Bauraum, so dass die Vorteile, die ein integriertes Werkzeugmagazin bietet, verloren gehen.

Vor diesem Hintergrund ist es eine Aufgabe der vorliegenden Erfindung, eine möglichst kompakte Werkzeugmaschine mit einem Werkzeugmagazin anzugeben, das eine größere Anzahl an Magazinplätzen besitzt. Dabei sollen kurze Span-zu-Span-Zeiten beim Werkzeugwechsel möglich werden, und die Zahl der zu steuernden Antriebe soll möglichst gering sein.

Diese Aufgabe wird nach einem Aspekt der Erfindung durch eine Werkzeugmaschine der eingangs genannten Art gelöst, bei der die Bewegungsbahn an dem stationären Maschinengestell gelagert ist.

Bei der neuen Werkzeugmaschine beinhaltet die Bewegungsbahn insbesondere eine (an sich bekannte) Magazinkette. Die Magazinplätze können grundsätzlich jedoch auch auf andere Weise an der Bewegungsbahn entlang laufen. Die Magazinkette ist zwar beweglich und vorzugsweise umlaufend angeordnet, sie ist nun jedoch insgesamt gesehen stationär, da die Magazinkette (oder allgemeiner die Bewegungsbahn) bei den Verfahrbewegungen der Werkzeugspindel nicht mehr mitgeführt wird. Diese Anordnung besitzt den Vorteil, dass das Gewicht des Werkzeugmagazins beim Verfahren der Werkzeugspindel nicht bewegt werden muss, was eine höhere Dynamik und/oder die Verwendung von kostengünstigeren Antrieben ermöglicht. Andererseits ist die Größe des Werkzeugmagazins bzw. die Anzahl der Magazinplätze nicht mehr auf eine Länge beschränkt, die sich im Wesentlichen aus dem Außenumfang des Kreuzteils ergibt, wie dies bei der eingangs beschriebenen Werkzeugmaschine der Fall ist. Die (Ketten-)Länge und damit die Anzahl der Magazinplätze kann prinzipiell beliebig vergrößert werden. Damit ermöglicht die neue Werkzeugmaschine die Integration von Werkzeugmagazinen mit einer größeren Anzahl an Magazinplätzen.

In einem bevorzugten Ausführungsbeispiel wurde die Anzahl der Magazinplätze beispielsweise auf 120 erhöht.

Darüber hinaus profitiert die neue Werkzeugmaschine jedoch von den Vorteilen, die die Integration einer Bewegungsbahn ermöglicht. Der prinzipielle Aufbau der eingangs beschriebenen Werkzeugmaschine kann beibehalten werden. Die Erhöhung der Anzahl der Magazinplätze ist ohne zusätzliche Antriebe und damit verbundene Steuerfunktionen möglich. Daher kann die neue Werkzeugmaschine in bevorzugten Ausführungsbeispielen weiterhin Werkzeugwechsel im Pick-up-Verfahren durchführen. Wie nachfolgend anhand von bevorzugten Ausführungsbeispielen erläutert ist, ist auch weiterhin ein sehr kompakter Maschinenaufbau möglich. Tatsächlich wird der "Footprint" in bevorzugten Ausführungsbeispielen der Erfindung nur unwesentlich im Vergleich zu der eingangs beschriebenen Werkzeugmaschine erhöht, obwohl die Anzahl der Magazinplätze deutlich gesteigert wurde.

Des Weiteren lässt sich bei der neuen Werkzeugmaschine ein sehr stabiler und störungsfreier Kettenlauf realisieren, was zur Minimierung der Span-zu-Span-Zeiten beim Werkzeugwechsel beiträgt. Insgesamt ermöglicht die neue Werkzeugmaschine daher eine Erhöhung der Anzahl der Magazinplätze in einer Weise, bei der sämtliche Vorteile der eingangs beschriebenen Werkzeugmaschine erhalten bleiben.

Die oben angegebene Aufgabe ist daher vollständig gelöst.

In einer Ausgestaltung der Erfindung besitzt die Werkzeugmaschine eine zweite Schlittenführung ("X-Achse"), mit deren Hilfe die Werkzeugspindel in einer zweiten Achsrichtung relativ zu dem Maschinengestell verfahrbar ist, wobei auch die zweite Schlittenführung zumindest teilweise innerhalb der Mantelfläche angeordnet ist. Vorzugsweise verlaufen die erste und zweite Schlittenführung orthogonal zueinander. Besonders bevorzugt ist die erste Schlittenführung an der Oberseite eines Kreuzteils angeordnet, das auf der zweiten Schlittenführung bewegbar ist.

Die Mantelfläche ist eine vorzugsweise umlaufende, geschlossene Fläche, die sich aus einer gedachten Projektion der Bewegungsbahn oder Kettenlinie senkrecht zu derjenigen Fläche ergibt, die von der Bewegungsbahn bzw. Kettenlinie eingeschlossen wird. Die Mantelfläche umschließt somit einen Raumbereich, der sowohl die von der Bewegungsbahn umschlossene Grundfläche als auch die beidseitig dieser Grundfläche liegenden Raumbereiche beinhaltet. Bei einer kreisförmig umlaufenden Kette hätte die Mantelfläche also die Form eines Kreiszylinders. Bei einer anders verlaufenden Kettenlinie besitzt die Mantelfläche dementsprechend eine andere Zylinderform. In der bevorzugten Ausgestaltung läuft die Bewegungsbahn sowohl um die erste als auch um die zweite Schlittenführung herum, d.h. die Werkzeugspindel wird in beiden Richtungen (in einer senkrechten Draufsicht betrachtet) zumindest teilweise innerhalb der Bewegungsbahn bewegt. Diese Ausgestaltung ermöglicht eine besonders kompakte Bauweise.

In einer weiteren Ausgestaltung sind die erste und die zweite Schlittenführung überwiegend innerhalb der Mantelfläche angeordnet. Vorzugsweise liegen die erste und die zweite Schlittenführung vollständig innerhalb der Mantelfläche, d.h. die Schlittenführungen ragen nicht über die Mantelfläche hinaus.

In dieser Ausgestaltung bestimmt die Bewegungsbahn im Wesentlichen die lateralen Abmessungen der neuen Werkzeugmaschine in Bezug auf eine Ebene, die parallel zu der ersten und zweiten Schlittenführung aufgespannt wird. Diese Ausgestaltung ermöglicht eine maximale Steigerung der Magazinkapazität.

In einer weiteren Ausgestaltung definiert die Bewegungsbahn eine Grundfläche mit einer Längsausdehnung und einer Querausdehnung, wobei die erste Schlittenführung eine erste Länge und die zweite Schlittenführung eine zweite Länge besitzen, und wobei die erste und zweite Länge in etwa der Längsausdehnung und Querausdehnung entsprechen.

In dieser Ausgestaltung entspricht die von der Bewegungsbahn eingeschlossene Grundfläche in etwa derjenigen Fläche, die von der ersten und zweiten Schlittenführung aufgespannt wird. Diese Ausgestaltung führt zu einer besonders kompakten Bauform mit einer sehr effizienten Steigerung der Magazinkapazität. Der benötigte Bauraum ist im Vergleich zu der eingangs beschrieben Werkzeugmaschine nur unwesentlich größer. Trotzdem ließ sich in einem bevorzugten Ausführungsbeispiel die Anzahl der Magazinplätze auf 120 steigern.

In einer weiteren Ausgestaltung sind die erste und die zweite Schlittenführung mit einem senkrechten Abstand zueinander angeordnet, wobei die Bewegungsbahn im Bereich des senkrechten Abstandes verläuft.

In dieser Ausgestaltung verläuft die Bewegungsbahn in einer Ebene, die weitgehend zwischen den Ebenen liegt, die von der ersten und zweiten Schlittenführung aufgespannt werden. In einer bevorzugten Variante dieser Ausgestaltung besitzt die neue Werkzeugmaschine ein Kreuzteil, das innerhalb des von der Bewegungsbahn umschlossenen Bereiches verfährt. Die Bewegungsbahn liegt dabei in etwa auf Höhe des Kreuzteils. Auch diese Ausgestaltung trägt zu einer sehr kompakten Bauform bei vergrößerter Magazinkapazität bei. Außerdem ermöglicht diese Ausgestaltung eine kostengünstige Umrüstung von bestehenden Maschinen der eingangs beschriebenen Art, so dass diese mit größeren Magazinen bestückt werden können. Des weiteren ermöglicht diese Ausgestaltung kurze Verfahrwege der Werkzeugspindel beim Werkzeugwechsel im Pick-up-Verfahren, was für die Reduzierung der Span-zu-Span-Zeiten von Vorteil ist. Schließlich können die Bewegungsabläufe beim Werkzeugwechsel von der eingangs beschriebenen Werkzeugmaschine weitgehend übernommen werden.

In einer weiteren Ausgestaltung definieren die erste und die zweite Schlittenführung zwei parallele Ebenen, die oberhalb der Bewegungsbahn liegen.

In einer bevorzugten Variante dieser Ausgestaltung besitzt die neue Werkzeugmaschine ein Kreuzteil, das oberhalb der Grundfläche verfährt, die von der Bewegungsbahn aufgespannt wird. Werkzeugspindel und Kreuzteil liegen also auf derselben Seite der von der Bewegungsbahn aufgespannten Fläche. Diese Ausgestaltung ist besonders vorteilhaft für sehr große Maschinen, die zum Bearbeiten von sehr großen Werkstücken ausgebildet sind. Bei solchen Maschinen werden sehr lange Schlittenführungen benötigt. Diese können aufgrund der bevorzugten Ausgestaltung über die Mantelfläche herausragen, ohne dass die Bewegungen der Werkzeugspindel und des Werkzeugmagazins beeinträchtigt werden. Auf der anderen Seite ermöglicht diese Ausgestaltung die Verwendung von Magazinketten, deren Länge geringer ist als der Außenumfang um die erste und zweite Schlittenführung herum. Die Aufnahmekapazität des Werkzeugmagazins kann daher sehr einfach skaliert werden, was eine kostengünstige Realisierung ermöglicht.

In einer weiteren Ausgestaltung ist die Bewegungsbahn eine stationäre Führung, die mit dem Maschinengestell fest verbunden ist.

Eine solche Führung ermöglicht es insbesondere, eine Magazinkette an einem "herkömmlichen" Maschinengestell zu befestigen, was eine kostengünstige Realisierung erlaubt. Darüber hinaus ermöglicht eine solche Kettenführung einen gleichmäßigen und störungsfreien Kettenlauf. Letzteres gilt insbesondere, wenn die Kettenführung die Kette auf dem gesamten Laufweg abstützt.

In einer weiteren Ausgestaltung ist die Führung dazu ausgebildet, ein flexibles Zugmittel, insbesondere eine die Kette, in einer Horizontalebene zu führen, wobei die Magazinplätze an dem Zugmittel angeordnet sind..

Alternativ hierzu könnte die neue Werkzeugmaschine auch mit einer Bewegungsbahn und insbesondere mit einer Magazinkette realisiert werden, die in einer Vertikalebene oder einer "schräg gestellten" Ebene umläuft. Eine horizontal geführte Kette besitzt demgegenüber den Vorteil, dass die Kette ohne "Durchhänger" gleichmäßig belastet ist, was einen gleichmäßigen, schnellen und störungsfreien Kettenlauf ermöglicht.

In einer weiteren Ausgestaltung ist die Werkzeugspindel vertikal angeordnet. Vorzugsweise ist die Werkzeugspindel an einem vertikalen Fahrständer angeordnet, der auf der ersten Schlittenführung gelagert ist.

Alternativ zu einem Fahrständer könnte die Werkzeugspindel beispielsweise an einem Portal oder einer Brücke angeordnet sein. Auch mit solchen Gestellformen lässt sich eine vertikal angeordnete Werkzeugspindel realisieren. Die Verwendung eines Fahrständers zum Anordnen der Werkzeugspindel ermöglicht demgegenüber jedoch einen besonders kompakten und stabilen Aufbau. Darüber hinaus ermöglicht die Verwendung einer vertikal angeordneten Spindel besonders einfache und schnelle Werkzeugwechsel im Pick-up-Verfahren, wenn die Magazinkette in einer Horizontalebene umläuft.

In einer weiteren Ausgestaltung ist die Werkzeugspindel dazu ausgebildet, zumindest einen der Magazinplätze direkt anzufahren, um ein Bearbeitungswerkzeug zu entnehmen oder abzulegen.

In dieser Ausgestaltung findet ein Werkzeugwechsel im Pick-up-Verfahren statt, was sehr schnelle Werkzeugwechsel, einen kompakten Bauraum und eine relativ einfache Maschinensteuerung ermöglicht.

In einer weiteren Ausgestaltung weist das Werkzeugmagazin eine Vielzahl von Bewegungsbahnen auf, die übereinander angeordnet sind. Vorzugsweise liegen die Bewegungsbahnen weitgehend kongruent zueinander, jedoch mit einem gewissen Schrägversatz, der einen Werkzeugwechsel im Pick-up-Verfahren ermöglicht.

Mit dieser Ausgestaltung lässt sich die Kapazität des Werkzeugmagazins auf kompaktem Bauraum nochmals erheblich steigern. Die grundlegenden Vorteile der Erfindung bleiben dabei erhalten.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines bevorzugten Ausführungsbeispiels der neuen Werkzeugmaschine in einer Seitenansicht,
- Fig. 2: die Werkzeugmaschine aus Fig. 1 bei einem Werkzeugwechsel,
- Fig. 3: die Werkzeugmaschine aus Fig. 1 in einer Draufsicht von oben, und
- Fig. 4: ein weiteres Ausführungsbeispiel der neuen Werkzeugmaschine.

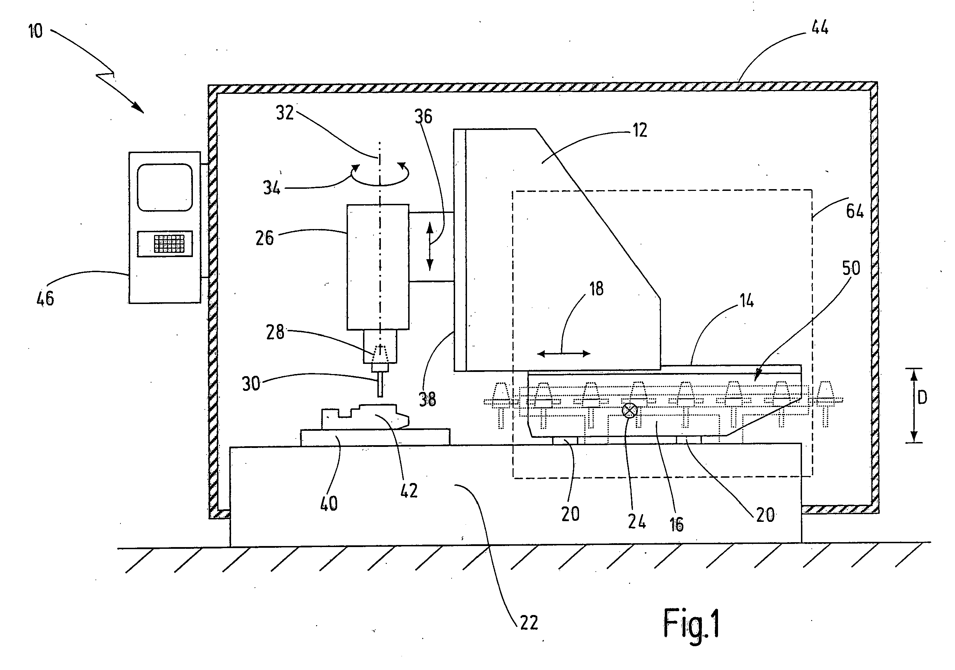

In Fig. 1 ist ein Ausführungsbeispiel der neuen Werkzeugmaschine in seiner Gesamtheit mit der Bezugsziffer 10 bezeichnet.

Die Werkzeugmaschine 10 besitzt einen Fahrständer 12, der über eine erste Schlittenführung 14 auf einem Kreuzteil 16 angeordnet ist. Der Fahrständer 12 kann mit Hilfe der ersten Schlittenführung 14 auf dem Kreuzteil 16 verfahren werden, was mit dem Pfeil 18 symbolisch dargestellt ist. Die Bewegungsrichtung des Fahrständers 12 auf dem Kreuzteil 16 wird üblicherweise als Y-Achse bezeichnet. Es versteht sich, dass der Fahrständer 12 auf der ersten Schlittenführung 14 motorisch verfahren wird, wobei ein entsprechender Antrieb hier aus Gründen der Übersichtlichkeit nicht dargestellt ist.

Das Kreuzteil 16 ist über eine zweite Schlittenführung 20 auf einem Maschinengestell 22 gelagert. Die erste und zweite Schlittenführung 14, 20 sind hier in einem senkrechten Abstand D zueinander angeordnet. Die zweite Schlittenführung 20 ermöglicht eine Bewegung des Kreuzteils 16 entlang einer zweiten Bewegungsrichtung, die hier bei der Bezugsziffer 24 dargestellt ist. Die Bezugsziffer 24 bezeichnet die so genannte X-Achse. Es versteht sich, dass auch die Bewegung des Kreuzteils 16 auf der zweiten Schlittenführung 20 mit Hilfe eines geeigneten Antriebs erfolgt, der hier aus Gründen der Übersichtlichkeit nicht dargestellt ist.

An dem Fahrständer 12 ist ein Spindelkopf mit einer Werkzeugspindel 26 vertikal hängend gelagert. Die Werkzeugspindel 26 besitzt an ihrem unteren Ende eine Spindelaufnahme 28, in die in bekannter Weise ein Bearbeitungswerkzeug 30 eingespannt werden kann. Typischerweise wird das Bearbeitungswerkzeug 30 mit Hilfe eines so genannten Werkzeughalters in die Spindelaufnahme 28 eingespannt. Die Werkzeugspindel 26 ist dazu ausgebildet, das Bearbeitungswerkzeug 30 um die Spindelachse 32 zu rotieren, was mit dem Pfeil 34 dargestellt ist. Typischerweise ist die Werkzeugspindel 26 in der Lage, das Bearbeitungswerkzeug 30 mit mehreren tausend Umdrehungen pro Minute zu rotieren, um insbesondere eine Bohr- und Fräsbearbeitung von metallischen Werkstücken zu ermöglichen.

Die Werkzeugspindel 26 kann an dem Fahrständer 12 in Richtung des Pfeils 36, hier also in vertikaler Richtung, verfahren werden. Dementsprechend ist die Werkzeugspindel 26 über eine dritte Schlittenführung 38 an dem Fahrständer 12 gelagert. Die Bewegung der Werkzeugspindel 26 in Richtung des Pfeils 36 wird üblicherweise als Z-Achse bezeichnet. Typischerweise verlaufen die drei Schlittenführungen 14, 20 und 38 für die drei Bewegungsachsen 18, 24, 36 orthogonal zueinander.

Mit der Bezugsziffer 40 ist ein Werkstücktisch bezeichnet, auf dem ein zu bearbeitendes Werkstück 42 aufgespannt ist. Der Werkstücktisch 40 kann beispielsweise ein Drehtisch sein, der eine Schwenkbewegung des Werkstücks 42 um eine Hochachse ermöglicht. Des Weiteren könnte der Werkstücktisch 40 in einer Brücke gelagert sein (hier nicht dargestellt), die eine weitere Schwenkbewegung des Werkstücks 42 um eine horizontale Achse ermöglicht. Als weitere Abwandlung könnte anstelle des Werkstücktisches 40 eine Werkstückspindel verwendet sein, so dass die Werkzeugmaschine 10 sowohl eine Drehbearbeitung als auch eine Fräs- und Bohrbearbeitung durchführen kann.

Mit der Bezugsziffer 44 ist eine Umhausung bezeichnet, die die beschriebenen Komponenten der Werkzeugmaschine 10 einschließt. Mit der Bezugsziffer 46 ist eine Steuereinheit bezeichnet, mit deren Hilfe die Bewegungen der Werkzeugmaschine 10 sowie Hilfsaggregate (Kühlmittelzufuhr, Druckluft sowie das nachfolgend beschriebene Werkzeugmagazin) gesteuert werden.

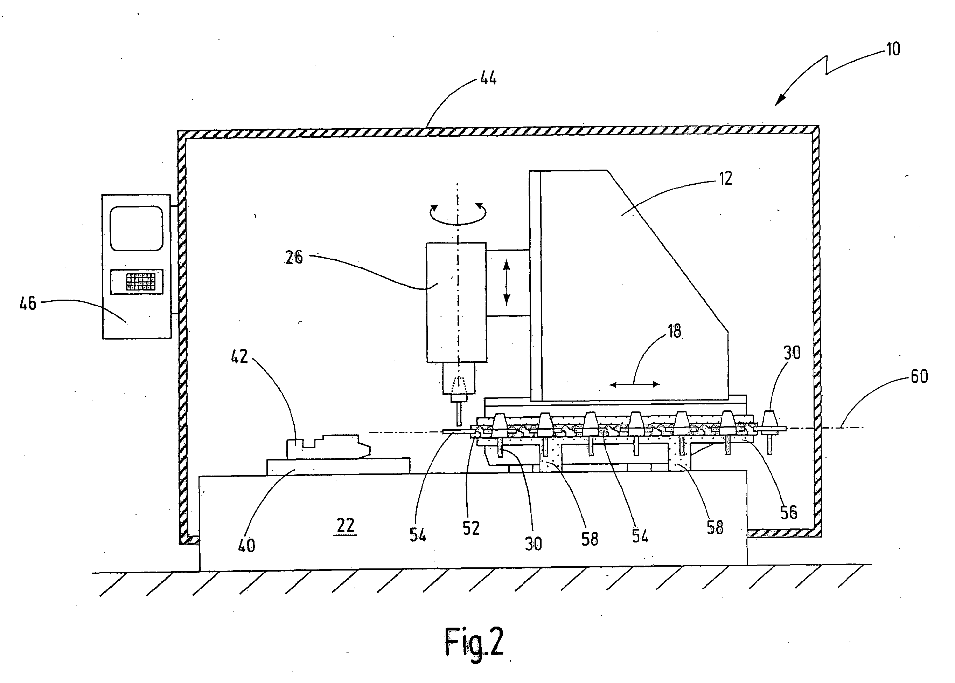

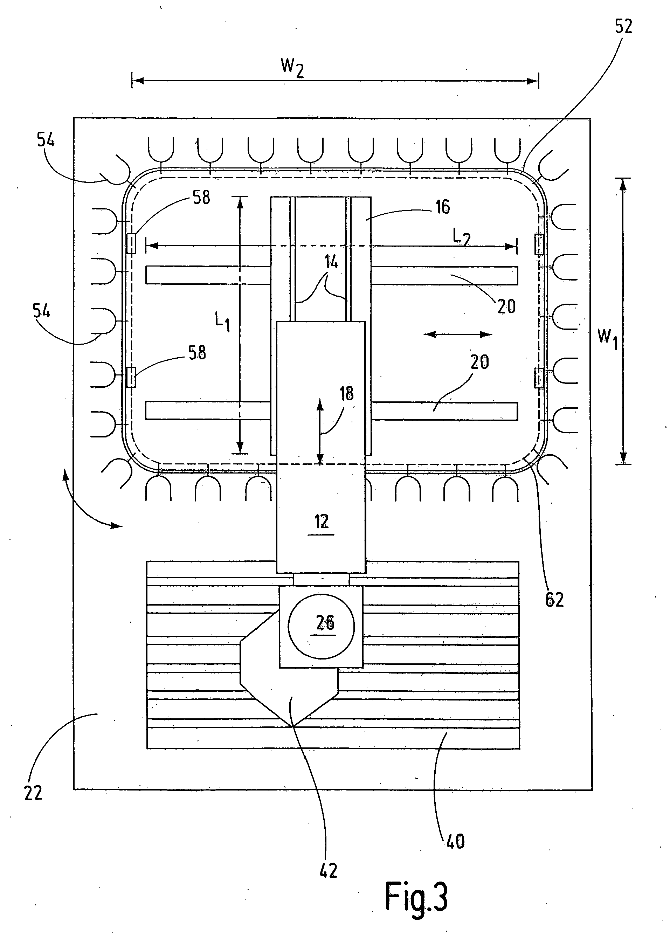

In Fig. 1 ist ein Werkzeugmagazin 50 nur schematisch dargestellt, um die Lage des Kreuzteils 16 und der Schlittenführungen 14, 16 sichtbar zu machen. Fig. 2 und 3 zeigen demgegenüber, dass das Werkzeugmagazin 50 um das Kreuzteil 16 herum angeordnet ist, so dass sich das Kreuzteil 16 gewissermaßen in dem Innenraum bewegt, der von dem Werkzeugmagazin 50 umschlossen wird. Daher wird für die weiteren Erläuterungen auch auf die Fig. 2 und 3 Bezug genommen, in denen gleiche Bezugszeichen dieselben Elemente bezeichnen wie zuvor.

Das Werkzeugmagazin 50 besitzt hier eine umlaufende Kette 52, an der eine Vielzahl von Haltern 54 angeordnet sind. Die Halter 54 sind hier zangenartige Elemente, die zum Aufnehmen von jeweils einem Bearbeitungswerkzeug 30 dienen. Der prinzipielle Aufbau einer solchen Magazinkette mit Haltern 54 ist den einschlägigen Fachleuten bekannt und dementsprechend hier nicht näher erläutert.

Die Kette 52 ist an einer umlaufenden Kettenführung 56 gelagert. Die Kettenführung 56 ist über Stützen 58 mit dem Maschinengestell 22 fest verbunden. Das Werkzeugmagazin 50 ist daher ein stationäres Kettenmagazin, welches in dem bevorzugten Ausführungsbeispiel der Fig. 1 bis 3 um das Kreuzteil 16 der Werkzeugmaschine 10 herum angeordnet ist.

Die Kette 52 ist in dem dargestellten Ausführungsbeispiel horizontal angeordnet. Dementsprechend läuft die Kette 52 in einer horizontalen Ebene um, die in Fig. 2 bei der Bezugsziffer 60 dargestellt ist.

Wie man in Fig. 3 erkennen kann, umschließt die Kette 52 eine Grundfläche 62, die mit einer gestrichelten Linie dargestellt ist. Wenn man die Begrenzungslinie dieser Grundfläche senkrecht zu der Betrachtungsebene in Fig. 3 projiziert, erhält man eine zylinderförmige Mantelfläche, die in Fig. 1 bei der Bezugsziffer 64 dargestellt ist. Bei der neuen Werkzeugmaschine 10 sind sowohl die erste Schlittenführung 14 als auch die zweite Schlittenführung 20 vollständig innerhalb der Mantelfläche 64 angeordnet. Mit anderen Worten bewegt sich das Kreuzteil 16 innerhalb desjenigen Raumbereichs, der von der Mantelfläche 64 umschlossen ist. Anders als bei der eingangs beschriebenen Werkzeugmaschine aus DE 43 11 469 C1 wird die Magazinkette bei den Bewegungen des Kreuzteils 16 nicht mitgeführt, sondern sie ist stationär mit dem Maschinengestell 22 verbunden. Wie in Fig. 2 dargestellt ist, kann ein Werkzeugwechsel jedoch weiterhin im Pick-up-Verfahren durchgeführt werden, indem die Werkzeugspindel 26 direkt zu einem der Magazinplätze 54 verfahren wird.

Wie in Fig. 3 dargestellt ist, besitzt die erste Schlittenführung 14 hier eine erste Länge L₁, und die zweite Schlittenführung 20 besitzt eine zweite Länge L₂. Die Länge L₁ entspricht in etwa der Längsausdehnung W₁ der Grundfläche 62. Die zweite Länge L₂ entspricht in etwa der Querausdehnung W₂ der Grundfläche 62. Dementsprechend kann das Kreuzteil 16 hier nahezu den gesamten von der Kette 52 umschlossenen Bereich für die Verfahrbewegungen ausnutzen. Umgekehrt ist die Kette 52 so kompakt wie möglich in die Werkzeugmaschine 10 integriert.

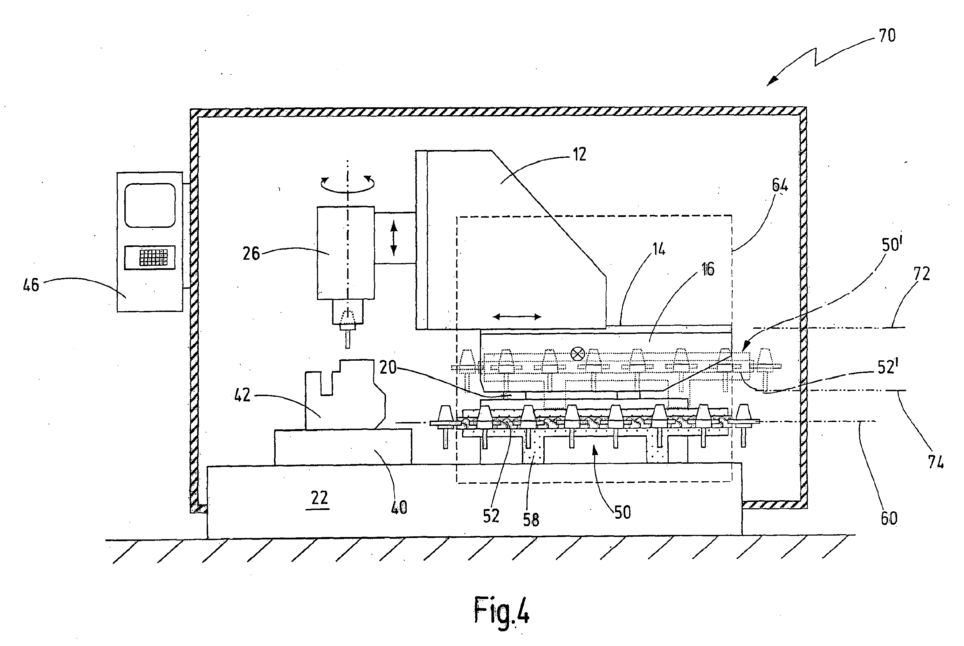

Fig. 4 zeigt ein weiteres Ausführungsbeispiel der neuen Werkzeugmaschine, das mit der Bezugsziffer 70 bezeichnet ist. Die erste Schlittenführung 14 definiert hier eine erste Ebene 72 und die zweite Schlittenführung 20 definiert eine zweite Ebene 74. Das Werkzeugmagazin 50 liegt hier unterhalb der Ebenen 72, 74. Mit anderen Worten ist das Werkzeugmagazin 50 hier unterhalb des Kreuzteils 16 angeordnet.

Dieses Ausführungsbeispiel bietet sich vor allem bei großen Maschinen an, bei denen die Schlittenführungen 14, 20 sehr lang sein können und durch die Mantelfläche 64 hindurch ragen können. Auch bei der Werkzeugmaschine 70 verlaufen die Schlittenführungen 14, 20 jedoch zu einem nicht unerheblichen Teil innerhalb der Mantelfläche 64. Des Weiteren ist auch bei der Werkzeugmaschine 70 das Werkzeugmagazin 50 stationär angeordnet, indem es über Stützen 58 mit dem Maschinengestell 22 verbunden ist.

In Fig. 4 ist eine weitere Abwandlung schematisch dargestellt. In dieser Abwandlung besitzt die Werkzeugmaschine 70 zwei Magazinteile 50, 50' bzw. zwei umlaufende Ketten 52, 52', die übereinander angeordnet sind. In dem dargestellten Ausführungsbeispiel ist das Magazinteil 50' parallel zu der Horizontalebene 60 nach hinten versetzt, um in beiden Magazinteilen einen Werkzeugwechsel im Pick-up-Verfahren zu ermöglichen.

## Patentansprüche

1. Werkzeugmaschine zum spanabhebenden Bearbeiten von Werkstücken (42), mit einem stationären Maschinengestell (22), mit einer Werkzeugspindel (26) mit einer Spindelaufnahme (28) zum Einspannen eines Bearbeitungswerkzeugs (30), und mit einer ersten Schlittenführung (14), mit deren Hilfe die Werkzeugspindel (26) in einer ersten Achsrichtung (18) relativ zu dem Maschinengestell (22) verfahrbar ist, ferner mit einem Werkzeugmagazin (50), das eine Vielzahl von Magazinplätzen (54) zum Vorhalten einer Vielzahl von Bearbeitungswerkzeugen (30) besitzt, wobei das Werkzeugmagazin (50) zumindest eine Bewegungsbahn (52) aufweist, an der die Magazinplätze (54) entlang laufen, und wobei die Bewegungsbahn (52) eine Mantelfläche (62, 64) definiert, innerhalb der die erste Schlittenführung (14) zumindest teilweise angeordnet ist, **dadurch gekennzeichnet, dass** die Bewegungsbahn (52) an dem stationären Maschinengestell (22) gelagert ist.

2. Werkzeugmaschine nach Anspruch 1, **gekennzeichnet durch** eine zweite Schlittenführung (20), mit deren Hilfe die Werkzeugspindel (26) in einer zweiten Achsrichtung (24) relativ zu dem Maschinengestell (22) verfahrbar ist, wobei auch die zweite Schlittenführung (20) zumindest teilweise innerhalb der Mantelfläche (62, 64) angeordnet ist.

3. Werkzeugmaschine nach Anspruch 2, **dadurch gekennzeichnet, dass** die erste und die zweite Schlittenführung (14, 20) überwiegend innerhalb der Mantelfläche (62, 64) angeordnet sind.

4. Werkzeugmaschine nach Anspruch 2 oder 3, **dadurch gekennzeichnet, dass** die Bewegungsbahn (52) eine Grundfläche (62) mit einer Längsausdehnung (W₁) und einer Querausdehnung (W₂) definiert, wobei die erste Schlittenführung (14) eine erste Länge (L₁) und die zweite Schlittenführung (20) eine zweite Länge (L₂) besitzen, und wobei die erste und zweite Länge (L₁, L₂) in etwa der Längsausdehnung und Querausdehnung (W₁, W₂) entsprechen.

5. Werkzeugmaschine nach einem der Ansprüche 2 bis 4, **dadurch gekennzeichnet, dass** die erste und die zweite Schlittenführung (14, 20) mit einem senkrechten Abstand (D) zueinander angeordnet sind, wobei die Bewegungsbahn (52) im Bereich des senkrechten Abstandes (D) verläuft.

6. Werkzeugmaschine nach einem der Ansprüche 2 bis 4, **dadurch gekennzeichnet, dass** die erste und die zweite Schlittenführung (14, 20) zwei parallele Ebenen (72, 74) definieren, die oberhalb der Bewegungsbahn (52) liegen.

7. Werkzeugmaschine nach einem der Ansprüche 1 bis 6, **dadurch gekennzeichnet dass** die Bewegungsbahn eine stationäre Führung (56) ist, die mit dem Maschinengestell (22) fest verbunden ist.

8. Werkzeugmaschine nach Anspruch 7, **dadurch gekennzeichnet, dass** die Führung (56) dazu ausgebildet ist, ein flexibles Zugmittel, insbesondere eine Kette (52), in einer Horizontalebene (60) zu führen, wobei die Magazinplätze (54) an dem Zugmittel angeordnet sind.

9. Werkzeugmaschine nach einem der Ansprüche 1 bis 8, **dadurch gekennzeichnet, dass** die Werkzeugspindel (26) vertikal angeordnet ist, und zwar vorzugsweise an einem vertikalen Fahrständer (12), der auf der ersten Schlittenführung (14) gelagert ist.

10. Werkzeugmaschine nach einem der Ansprüche 1 bis 9, **dadurch gekennzeichnet, dass** die Werkzeugspindel (26) dazu ausgebildet ist, zumindest einen der Magazinplätze (54) direkt anzufahren, um ein Bearbeitungswerkzeug (30) zu entnehmen oder abzulegen.

11. Werkzeugmaschine nach einem der Ansprüche 1 bis 10, **dadurch gekennzeichnet, dass** das Werkzeugmagazin (50) eine Vielzahl von Bewegungsbahnen (52, 52') aufweist, die übereinander angeordnet sind.
